# EUROPÄISCHE PATENTSCHRIFT

(11) **EP 2 823 171 B1**
(45) Veröffentlichungstag und Bekanntmachung des Hinweises auf die Patenterteilung: **11.04.2018**
(21) Anmeldenummer: 13707600.6
(22) Anmeldetag: 25.02.2013
(51) Int. Cl.: F02D 41/14, H05B 1/02

(54) **VERFAHREN ZUR STEUERUNG EINER HEIZEINRICHTUNG ZUR BEHEIZUNG EINES BAUTEILS, STEUERVORRICHTUNG SOWIE KRAFTFAHRZEUG MIT EINER SOLCHEN**
METHOD FOR CONTROLLING A HEATING DEVICE FOR HEATING A COMPONENT, CONTROL DEVICE AND MOTOR VEHICLE WITH SAME
PROCÉDÉ DE COMMANDE D'UN DISPOSITIF DE CHAUFFAGE DESTINÉ À CHAUFFER UN ÉLÉMENT STRUCTURAL, DISPOSITIF DE COMMANDE ET VÉHICULE AUTOMOBILE COMPRENANT UN TEL DISPOSITIF

(30) Priorität: 05.03.2012 DE 102012203401
(43) Veröffentlichungstag der Anmeldung: 14.01.2015
(73) Patentinhaber: Volkswagen Aktiengesellschaft, 38440 Wolfsburg (DE)
(72) Erfinder: HAHN, Hermann, Carlton, VIC 3053 (AU)
(74) Vertreter: Gulde & Partner
(86) Internationale Anmeldenummer: PCT/EP2013/053665
(87) Internationale Veröffentlichungsnummer: WO 2013/131769

(56) Entgegenhaltungen:
- EP-A2- 0 822 326
- DE-A1- 10 015 282
- DE-A1-102008 011 833
- DE-A1-102008 011 834
- DE-A1-102008 013 515

## Beschreibung

Die Erfindung betrifft ein Verfahren zur Steuerung einer Heizeinrichtung zur Beheizung eines Bauteils, insbesondere einer Abgassonde. Die Erfindung betrifft weiterhin eine entsprechend eingerichtete Steuervorrichtung sowie ein Kraftfahrzeug, welches eine solche Steuervorrichtung zur Steuerung einer Heizeinrichtung zur Beheizung eines Bauteils, insbesondere einer Abgassonde, umfasst.

Es ist bekannt, Verbrennungsmotoren in Abhängigkeit einer Zusammensetzung ihrer Abgase zu steuern oder zu regeln, wobei die entsprechende Abgaskomponente mittels einer geeigneten Abgassonde gemessen wird. Insbesondere wird das Luft-Kraftstoff-Verhältnis, mit dem der Motor betrieben wird, geregelt, indem der Sauerstoffgehalt des Abgases mittels einer Lambdasonde im Abgastrakt gemessen wird. Dabei stellt die Lambdasonde ein von dem Sauerstoffgehalt des Abgases abhängiges Sondensignal bereit, bei dem es sich üblicherweise um eine Sondenspannung handelt. Die Betriebsbereitschaft einer Abgassonde erfordert jedoch eine gewisse Mindesttemperatur von beispielsweise 300 bis 400 °C.

Heutige Lambdasonden verfügen über leistungsfähige Beheizungselemente, um eine schnelle Betriebsbereitschaft der Sonde bei ihrer Aktivierung herzustellen und somit eine emissionsoptimierte Motorsteuerung zu gewährleisten. Dies hat den Nebeneffekt, dass die Heizspannung und die Dauer der Heizbeaufschlagung genau kontrolliert werden müssen. Andernfalls kann es zu Beschädigungen der Sonde aufgrund hoher Temperaturen oder thermischer Spannungen kommen. Üblicherweise werden daher maximal zulässige Heizspannungen definiert, welche in der Heizstrategie nicht überschritten werden dürfen. Ferner ist bekannt, eine maximal zulässige Dauer vorzubestimmen, mit welcher die Sonde mit der maximalen Heizspannung beaufschlagt werden darf. Die zulässige Dauer der Beheizung mit Maximalspannung kann ferner von zusätzlichen Kriterien abhängig gemacht werden, etwa von der Außentemperatur oder der vorausgegangenen unbeheizten Zeit des Sensors, welche einen Rückschluss auf die Sensortemperatur bei Heizbeginn zulässt. Dies ist deswegen erforderlich, da auch durch Heizspannungen, welche niedriger sind als die zulässige Maximalspannung, Schädigungen eintreten können, wenn diese über längere Zeit anliegen.

Derzeitige Lambdasonden dürfen beispielsweise mit einer Maximalspannung von 14 V bei einer ebenfalls vorgegebenen Grenzdauer beheizt werden. Doch selbst, wenn eine solche Sonde mit 13 V permanent beheizt wird, ist eine Grenzdauer einzuhalten, bei deren Überschreitung eine Schädigung der Sonde zu erwarten ist. Diese liegt zwar höher als die Grenzdauer für 14 V Heizspannung, muss jedoch ebenso berücksichtigt werden.

Aus DE 10 2005 006 760 A1 ist bekannt, die Beheizung von Lambdasonden in verschiedenen Phasen durchzuführen, wobei in der Anfangsphase die Heizspannung schnell auf eine hohe Spannung, vorzugsweise die volle Betriebsspannung, gebracht wird und anschließend stufen- oder rampenförmig reduziert wird. Auf diese Weise soll die Sonde möglichst schnell aufgeheizt werden, ohne sie jedoch zu beschädigen. Zusätzlich kann bereits vor Motorstart, etwa bei Öffnen der Fahrertür, eine Vorerwärmung bei einer sehr geringen Heizspannung erfolgen, beispielsweise bei 2 V.

Auch DE 10 2005 020 363 A1 schlägt eine Vorheizung der Lambdasonde bereits vor Motorstart vor, z.B. bei Aktivierung des Türkontakts. Hierbei wird zunächst mit einer höheren Anfangsspannung der Sensor mit einem hohen Temperaturgradienten auf eine Temperatur oberhalb der Taupunkttemperatur aber unterhalb einer Thermoschocktemperatur erwärmt, so dass vorhandenes Kondenswasser verdampfen kann. Ist die erste Temperatur erreicht, erfolgt die weitere Beheizung mit einer reduzierten Heizspannung, um die Sonde mit einem langsameren Temperaturgradienten auf die Zieltemperatur zu bringen, jedoch vor Überhitzung zu bewahren. Um ferner einem übermäßigen Aufheizen entgegenzuwirken, wird die Aufheizdauer begrenzt.

DE 102 29 026 A1 beschreibt eine elektrische Schaltungsanordnung zum Beheizen einer Lambdasonde mittels einer Leistungsendstufe in Form eines Feldeffekttransitors (FET). Dabei wird der Spannungsabfall über den Heizwiderstand und den FET abgegriffen. In Abhängigkeit von dem so gebildeten Rückkopplungssignal wird die Leistungsendstufe, d.h. die Gateelektrode des FET so angesteuert, dass die am Heizverbraucher abfallende Spannung weitgehend kompensiert wird. Im Ergebnis wird eine variable Strombegrenzung erzielt und ein ungeregeltes Hochheizen vermieden, welches die Sondenheizung zerstören könnte.

DE 100 15 282 A1 offenbart eine Sauerstoffkonzentrations-Erfassungseinrichtung und ein Verfahren zum Verwenden derselben.

Heutige Strategien der Sondenbeheizung sind mit der Problematik konfrontiert, dass die Vorbestimmungen der zulässigen Heizparameter (Maximalspannung und Grenzzeit der Maximalbeheizung, insbesondere aber die Grenzzeit) in Abhängigkeit von verschiedenen Parametern nur ungenau erfolgen kann. Infolgedessen wird der Sensor entweder zu stark beheizt oder die zulässigen Parameter werden mit so viel Sicherheitsabstand vorgegeben, dass die Betriebsbereitschaft des Sensors später als notwendig hergestellt ist.

Aufgabe der vorliegenden Erfindung ist daher, ein Verfahren sowie eine Vorrichtung zur Steuerung einer Heizeinrichtung für Lambdasonden und andere aktiv beheizte Bauteile zu schaffen, die diese geschilderten Nachteile des Standes der Technik überwinden. Das zu beheizende Bauteil soll also möglichst schnell und möglichst sicher auf seine Betriebstemperatur beheizt werden.

Diese Aufgabe wird durch ein Verfahren zur Steuerung einer Heizeinrichtung zur Beheizung eines Bauteils, eine entsprechend eingerichtete Steuereinrichtung sowie ein Kraftfahrzeug mit einer solchen mit den Merkmalen der unabhängigen Ansprüche gelöst.

Das erfindungsgemäße Verfahren umfasst die zyklisch sich wiederholenden Schritte:
- Betreiben der Heizeinrichtung mit einer Heizspannung,
- Ermittlung einer aktuellen Heizspannung der Heizeinrichtung,
- Bestimmung einer mittleren Heizspannung für eine vorbestimmte, unmittelbar zurückliegende Dauer,
- Bestimmung einer zulässigen Grenzheizzeit, mit welcher das Bauteil mit der aktuellen Heizspannung oder mit der mittleren Heizspannung längstens beheizt werden darf, in Abhängigkeit von der mittleren Heizspannung,
- Vergleich der aktuellen Heizspannung sowie der mittleren Heizspannung mit einer vorbestimmten unteren Grenzheizspannung, und
- wenn die aktuelle Heizspannung und/oder die mittlere Heizspannung die vorbestimmte untere Grenzheizspannung für die Dauer der zulässigen Grenzheizzeit überschreitet, Reduzieren der Heizspannung der Heizeinrichtung.

Mit diesem Verfahren werden die geschilderten Nachteile des Standes der Technik behoben. Insbesondere ist es auf einfache Weise möglich, die Heizspannung, mit welcher die Heizeinrichtung betrieben wird, so zu begrenzen, dass einerseits eine Überheizung des Bauteils sicher vermieden wird, andererseits das Potenzial des Heizers voll ausgenutzt werden kann. Durch die Ermittlung des Mittelwerts der aufgeprägten Heizspannung für die unmittelbare Vergangenheit wird die tatsächliche thermische Belastung des beheizten Bauteils erfasst. Indem die zulässige Grenzheizzeit, mit welcher das Bauteil mit der aktuell anliegenden Heizspannung längstens beheizt werden darf, permanent in Abhängigkeit von der ermittelten mittleren Heizspannung aktualisiert wird, wird die Heizstrategie gemäß der vorliegenden Erfindung mit hoher Genauigkeit an die tatsächliche thermische Beaufschlagung des Bauteils angepasst. Wenn entweder die aktuell anliegende Heizspannung oder die ermittelte mittlere Heizspannung größer ist als die vorbestimmte untere Grenzheizspannung, beginnt ein Zeitzähler zu laufen. Ist die zulässige Grenzheizzeit erreicht, ohne das die aktuelle Heizspannung bzw. die mittlere Heizspannung unterhalb der unteren Grenzheizspannung abgefallen ist, wird die Heizspannung der Heizeinrichtung auf die untere Grenzheizspannung abgesenkt.

Dabei versteht es sich, dass der Begriff "Heizspannung" auch Größen einschließt, die von der Heizspannung abgeleitet sind oder mit dieser korrelieren, obwohl dieses aus Gründen der Übersichtlichkeit und Knappheit nicht jedes Mal im Einzelnen angegeben ist. Beispielsweise schließt die vorliegende Erfindung auch die Verwendung der Heizleistung als eine mit der Heizspannung korrelierenden oder von dieser ableitbaren Größe ein. Selbstverständlich gilt entsprechendes auch für die Merkmale "aktuelle Heizspannung", "mittlere Heizspannung", "untere Grenzheizspannung" etc.

Nach einer vorteilhaften Ausgestaltung der Erfindung wird die Heizeinrichtung ab Beginn der Beheizung mit einer bauteilspezifischen zulässigen Maximalheizspannung betrieben. Typischerweise sind zulässige Maximalheizspannungen von den Herstellern beheizter Bauteile, insbesondere von Lambdasonden vorgegeben. Eine typische zulässige Maximalheizspannung für Lambdasonden, welche mittels einer Widerstandsheizung beheizt werden, ist typischerweise 14 Volt, seltener 13 Volt. Durch Beginn der Beheizung mit der zulässigen Maximalheizspannung wird erreicht, dass das Bauteil mit dem größtmöglichen Temperaturgradienten beheizt wird. Dieses gewährleistet ein möglichst schnelles Aufheizen und im Falle von Lambdasonden ihr schnelles Erreichen der Betriebstemperatur.

In einer bevorzugten Ausführung kann die "unmittelbar zurückliegende Dauer", für welche die mittlere Heizspannung ermittelt wird, entsprechend der zulässigen Grenzheizzeit für die Beheizung mit der bauteilspezifischen zulässigen Maximalheizspannung vorbestimmt werden. Im Fall von Lambdasonden beispielsweise liegt die zulässige Grenzheizzeit für die Beheizung mit der zulässigen Maximalheizspannung typischerweise im Bereich von wenigen Sekunden, beispielsweise bei 6 bis 10 Sekunden, insbesondere etwa bei 8 Sekunden, so dass auch der Mittlungszeitraum entsprechend gewählt wird.

In weiterer vorteilhafter Ausgestaltung der Erfindung wird die untere Grenzheizspannung so vorbestimmt, dass ihr Anliegen über längere Zeit, beispielsweise von mindestens 30 Sekunden, insbesondere von mindestens 1 Minute, zu keiner thermischen Beeinträchtigung des beheizten Bauteils führt. Vorzugsweise ist die untere Grenzheizspannung so bemessen, dass ihr dauerhaftes Anliegen zu keiner thermischen Beeinträchtigung des Bauteils führt. Diese Ausführung führt zu dem vorteilhaften Effekt, dass, wenn ein Umschalten der Heizspannung der Heizeinrichtung auf die untere Grenzheizspannung aufgrund des Erreichens der zulässigen Grenzheizzeit erfolgt, eine beschädigungsfreie Weiterbeheizung des Bauteils sichergestellt ist. In diesem Zusammenhang ist besonders bevorzugt vorgesehen, dass die untere Grenzheizspannung so hoch wie möglich vorbestimmt wird, dass ihr dauerhaftes Anliegen soeben nicht zu einer thermischen Beeinträchtigung des Bauteils führt. Ferner erfolgt in bevorzugter Ausführung der Erfindung die Reduzierung der Heizspannung der Heizeinrichtung, wenn die aktuelle Heizspannung und/oder die mittlere Heizspannung die vorbestimmte untere Grenzheizspannung für die Dauer der zulässigen Grenzheizzeit überschreitet, auf die untere Grenzheizspannung oder auf eine niedrigere Heizspannung als die untere Grenzheizspannung. Indem also die untere Grenzheizspannung so hoch wie möglich vorbestimmt wird, ohne dass eine thermische Beeinträchtigung des Bauteils in Kauf genommen werden muss, wird selbst bei Umschalten der Heizeinrichtung auf die untere Grenzheizspannung weiterhin eine Aufheizrate gewährleistet, die so hoch wie möglich, gleichzeitig aber gerade noch verträglich ist.

In bevorzugter Ausführung des Verfahrens wird als aktuelle Heizspannung der Heizeinrichtung eine aktuelle Ausgangsspannung (Versorgungsspannung) einer die Heizeinrichtung betreibende Energiequelle, insbesondere einer Batterie, beispielsweise einer Fahrzeugbatterie, angesetzt. Diese Größe ist in den meisten Systemen, beispielsweise Fahrzeugen, ohnehin bekannt. Zudem weicht die tatsächlich an der Heizeinrichtung anliegende Spannung praktisch nicht von der Versorgungsspannung ab. Grundsätzlich kann als aktuelle Heizspannung der Heizeinrichtung zwar auch die gemessene, tatsächlich an der Heizeinrichtung anliegende Spannung verwendet werden. Deren Erfassung ist jedoch mit einem erhöhten Aufwand verbunden, der angesichts der guten Genauigkeit der Verwendung der Versorgungsspannung nicht gerechtfertigt erscheint.

Es ist ferner bevorzugt vorgesehen, nach Ablauf einer vorbestimmten Resetierzeit nach Reduzieren der Heizspannung, die Heizeinrichtung wieder mit der zulässigen Maximalheizspannung zu betreiben. Auf diese Weise wird nach einer gewissen "Abkühlzeit" des Bauteils dieses wieder mit der höheren Heizspannung beheizt. Auch diese Ausführungsform sichert ein möglichst schnelles Erreichen der Betriebstemperatur des Bauteils. Die Resetierzeit wird vorzugsweise so vorbestimmt, dass nach Betreiben der Heizeinrichtung mit der unteren Grenzheizspannung beziehungsweise der niedrigeren Heizspannung für die Dauer der Resetierzeit ein Abkühlen des Bauteils auf eine unkritische Temperatur zu erwarten ist. Auf diese Weise wird die schnelle und dennoch schädigungsfreie Beheizung des Bauteils sichergestellt.

Obwohl das erfindungsgemäße Verfahren für jedes aktiv beheizte Bauteil vorteilhaft zur Anwendung gelangen kann, sieht eine bevorzugte Ausführung der Erfindung vor, dass das zu beheizende Bauteil ein Sensor ist, insbesondere ein Abgassensor für einen Verbrennungsmotor. Vorzugsweise handelt es sich um eine Lambdasonde.

Ein weiterer Aspekt der vorliegenden Erfindung betrifft eine Steuervorrichtung zur Steuerung einer Heizeinrichtung zur Beheizung eines Bauteils, die zur Ausführung des erfindungsgemäßen Verfahrens eingerichtet ist. Insbesondere umfasst die Steuervorrichtung einen gespeicherten Algorithmus in computerlesbarer Form zur Ausführung des Verfahrens. Darüber hinaus kann die Steuervorrichtung Kennlinien und Kennfelder umfassen, die zur Ausführung des Verfahrens notwendig oder von Vorteil sind.

Ein weiterer Aspekt der vorliegenden Erfindung betrifft ein Kraftfahrzeug mit einem Verbrennungsmotor und einer diesem angeschlossenen Abgasanlage mit einem Abgassensor, der eine Heizeinrichtung zu seiner Beheizung aufweist. Das Kraftfahrzeug umfasst ferner eine Steuervorrichtung zu Steuerung der Heizeinrichtung zur Beheizung des Abgassensors, welche zur Ausführung des Verfahrens eingerichtet ist.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: einen Verbrennungsmotor eines Kraftfahrzeugs mit angeschlossener Abgasanlage und Lambdasonde und Steuereinrichtung zur Beheizung der Lambdasonde gemäß der vorliegenden Erfindung,
- Figur 2: ein Logikschaltbild des erfindungsgemäßen Verfahrens zur Steuerung der Beheizung einer Lambdasonde und
- Figur 3: zeitliche Verläufe der aktuellen und mittleren Heizspannung bei Beheizung einer Lambdasonde mit dem erfindungsgemäßen Verfahren.

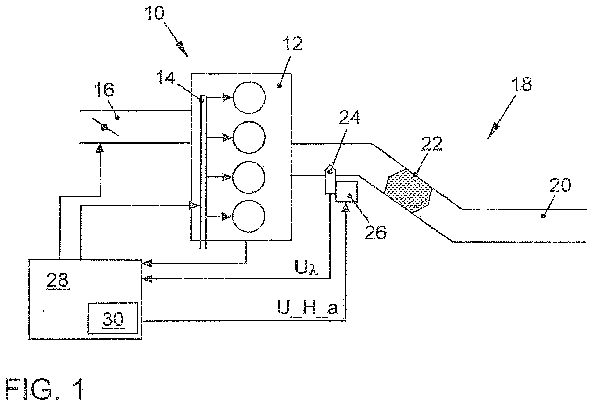

Figur 1 zeigt ein Kraftfahrzeug 10, von dem hier lediglich der Verbrennungsmotor 12 sowie die daran angeschlossene Abgasanlage 18 dargestellt ist.

Der Verbrennungsmotor 12 wird über eine Kraftstoffzufuhr 14, etwa in Form einer Zylinderdirekteinspritzung oder einer Saugrohreinspritzung, mit Kraftstoff versorgt. Ferner erfolgt die Zufuhr von Verbrennungsluft über eine Luftzufuhr 16, die insbesondere ein Luftansaugrohr aufweist. Gegebenenfalls kann die zugeführte Luftmenge über ein in dem Ansaugrohr angeordnetes steuerbares Stellelement, beispielsweise einer Drosselklappe, reguliert werden.

Ein von dem Verbrennungsmotor 12 erzeugtes Abgas wird über einen Abgaskanal 20 der Abgasanlage 18 in die Umgebung entlassen, wobei umweltrelevante Abgasbestandteile durch einen oder mehrere Katalysator/en 22 und/oder andere Abgasnachbehandlungseinrichtungen entfernt werden.

Innerhalb des Abgaskanals 20 ist an einer motornahen Position eine Abgassonde 24 angeordnet, bei der es sich hier um eine Lambdasonde handelt, beispielsweise eine Sprungantwort-Lambdasonde oder eine Breitband-Lambdasonde. Gegebenenfalls können eine oder mehrere weitere Abgassonden vorgesehen sein, insbesondere auch stromab des Katalysators 22. Die Lambdasonde 24 benötigt mindestens eine bestimmte Betriebstemperatur, ehe sie ein (zuverlässiges) Sondensignal bereitstellt, typischerweise in Gestalt einer Sondenspannung U_{λ}. Das Sondensignal U_{λ} ist ein Maß für den Sauerstoffgehalt des Abgases, so dass mittels einer Kennlinie der Sonde das aktuelle Luft-Kraftstoffverhältnis λ des Motors 12 ermittelt und geregelt werden kann. Um diese Betriebstemperatur der Lambdasonde 24 nach einem Motorkaltstart möglichst schnell zu erzielen, ist diese mit einer Heizeinrichtung 26 ausgestattet, die mit einer variablen Heizspannung betrieben werden kann. Bei der Heizeinrichtung 26 handelt es sich typischerweise um eine elektrische Widerstandsheizung.

Die Signale der Abgassonde 24 (und gegebenenfalls weiterer Sensoren sowie weitere Betriebsparameter des Motors 12) werden an eine Motorsteuerung 28 übermittelt. Die Motorsteuerung 28 steuert in Abhängigkeit der eingehenden Signale in bekannter Weise verschiedene Komponenten des Verbrennungsmotors 12. Insbesondere erfolgt in Abhängigkeit von dem Sondensignal (der Sondenspannung) der motornahen Lambdasonde 24 eine Regelung des den Verbrennungsmotor zuzuführenden Luft-Kraftstoff-Gemischs, wofür die Motorsteuerung 28 eine über die Kraftstoffzufuhr 14 zuzuführende Kraftstoffmenge und/oder eine über die Luftzufuhr 16 zuzuführende Luftmenge regelt. Die Motorsteuerung 28 umfasst eine Steuervorrichtung 30, welche zur Ausführung des erfindungsgemäßen Verfahrens zur Steuerung der Heizeinrichtung 26 zur Beheizung der Lambdasonde 24 eingerichtet ist. Zu diesem Zweck enthält die Steuervorrichtung 30 einen entsprechenden Algorithmus in computerlesbarer Form sowie gegebenenfalls geeignete Kennlinien und Kennfelder.

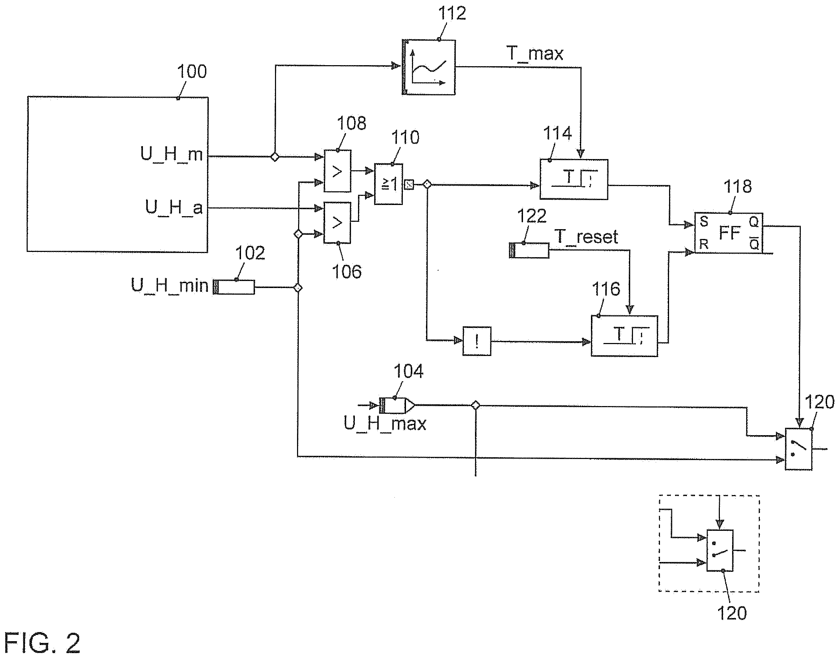

Das vorliegende Verfahren wird nachfolgend am Beispiel der Beheizung der Lambdasonde 24 anhand des Logikschaltbildes von Figur 2 erläutert.

Im Eingangsblock 100 wird zunächst die aktuelle Heizspannung U_H_a, mit welcher die Heizeinrichtung 26 der Lambdasonde 24 beaufschlagt wird, eingelesen. Insbesondere wird als aktuelle Heizspannung U_H_a die aktuelle Batteriespannung der Fahrzeugbatterie eingelesen, es sei denn, die Heizeinrichtung 26 wird mit einer geringeren Spannung beaufschlagt. Zudem wird in Abhängigkeit von der aktuellen Heizspannung U_H_a eine mittlere Heizspannung U_H_m für eine unmittelbar zurückliegende Dauer bestimmt. Im vorliegenden Beispiel beträgt diese Mittlungsdauer 8 Sekunden. Die Bestimmung der mittleren Heizspannung U_H_m erfolgt hier durch arithmetische Mittelung der in jeder zyklischen Wiederholung ermittelten aktuellen Heizspannung U_H_a der Heizeinrichtung 26 über die vorgesehene Dauer von 8 s.

Die Ausgangswerte aus Block 100 gehen als Eingangswerte in die Vergleichsblöcke 106 bzw. 108 ein. In Block 106 wird abgefragt, ob die aktuelle Heizspannung U_H_a größer ist als eine untere Grenzheizspannung U_H_min, die in Block 102 vorbestimmt wird. Im Block 108 wird abgefragt, ob die mittlere Heizspannung U_H_m der zurückliegenden 8 Sekunden größer ist als die untere Grenzheizspannung U_H_min. Die untere Grenzheizspannung U_H_min entspricht dabei vorzugsweise einer Spannung, die gerade so groß wie möglich ist, ohne bei dauerhaftem Anliegen eine Schädigung der Lambdasonde 24 zu verursachen. Die Ausgangswerte der Abfrageblöcke 106 und 108 gehen in den Abfrageblock 110 ein, der überprüft, ob zumindest eine der Abfragen 106 oder 108 bejaht wurde, das heißt, ob die aktuelle Heizspannung U_H_a und/oder die mittlere Heizspannung U_H_m größer als die untere Grenzheizspannung U_H_min ist. Es handelt sich bei dem Block 110 somit um eine nicht-exklusive ODER-Abfrage. Wird diese Abfrage bejaht, erzeugt Block 110 das Ausgangssignal "true". Wird die Abfrage in 110 hingegen verneint, das heißt, beide Größen U_H_a und U_H_m sind kleiner als oder gleich U_H_min, ist das Ausgangssignal des Blocks 110 "false".

In Abhängigkeit von der mittleren Heizspannung U_H_m wird ferner eine zulässige Grenzheizzeit T_max in jedem Zyklus bestimmt, über welche die Lambda-Sonde 24 mit der aktuellen Heizspannung U_H_a unter Berücksichtigung der zurückliegenden Beheizung während der vergangenen Dauer von 8 s beheizt werden darf. Hierzu wird in Block 112 mittels einer in der Steuereinrichtung 30 gespeicherten Kennlinie die zulässige Grenzheizzeit T _max in Abhängigkeit von der bestimmten mittleren Heizspannung U_H_m ausgelesen. Dabei gilt, je höher die mittlere Heizspannung U_H_m ist, das heißt, je höher die vergangene thermische Belastung der Lambdasonde 24 war, desto geringer ist die zulässige Grenzheizzeit T_max.

Sobald der Block 110 das Signal "true" ausgibt, das heißt, die aktuell anliegende Heizspannung U_H_a und/oder die mittlere Heizspannung U_H_m ist größer als die untere Grenzheizspannung U_H_min, beginnt ein Zeitzähler zu laufen. Die Dauer, für die der Wert "true" vorliegt, wird in Block 114 aufsummiert und mit der in Block 112 ermittelten zulässigen Grenzheizzeit T_max verglichen. Sobald der Integrator in Block 114 festgestellt hat, dass die zulässige Grenzheizzeit T_max erreicht wurde, das heißt, eine der beiden Größen U_H_a und/oder U_H_m für die Dauer der zulässigen Grenzheizzeit T_max die untere Grenzheizspannung U_H_min überschritten haben, nimmt das Ausgangssignal des Blocks 114 den Wert "true" an.

Dieser Wert geht in den Flip-Flop-Block 118 ein. Bei diesem Flip-Flop-Element handelt es sich um ein speicherndes Element, welches seinerseits den Wert "true" annimmt, sobald die Bedingung am Eingang S (Setup) erfüllt ist, und welches den Wert "false" annimmt, wenn die Bedingung "true" am Eingang R (Reset) erfüllt ist. Das Flip-Flop-Element 118 betätigt den anschließenden Schalter 120. Der Schalter 120 verbindet die Heizeinrichtung 26 der Lambda-Sonde 24 entweder mit der zulässigen Maximalheizspannung U_H_max, welche in Block 104 als bauteilspezifische Größe vorgegeben wird, oder mit der niedrigeren, unteren Grenzheizspannung U_H_min aus Block 102. In der in Figur 2 gezeigten Schalterstellung des Schalters 120 liegt die zulässige Maximalheizspannung U_H_max an der Heizeinrichtung 26 an. Sobald das Flip-Flop-Element 118 durch Erfüllung der Bedingung am Eingang S gesetzt wird, das heißt, die zulässige Grenzheizzeit T_max erreicht ist, wird der Schalter 120 betätigt und auf die in dem unteren Ausschnitt in Figur 2 dargestellte Position gesetzt. Ab diesem Zeitpunkt wird die Heizeinrichtung 26 mit der unteren Grenzheizspannung U_H_min beaufschlagt.

Solange die Heizeinrichtung 26 mit der unteren Grenzheizspannung U_H_min betrieben wird, nimmt die aktuelle Heizspannung U_H_a einen entsprechenden Wert an und die Abfrage in Block 106 wird negativ. Mit einer gewissen Verzögerung fällt auch die mittlere Heizspannung U_H_m auf untere Grenzheizspannung Wert U_H_min, so dass auch die Abfrage in Block 108 negativ wird. Sobald sowohl in Block 106 als auch in Block 108 das Ausgangssignal den Wert "false" annimmt, nimmt auch das Ausgangssignal des Blocks 110 den Wert "false" an. Damit wird nicht mehr der Zeitzähler im Block 114 aktiviert, sondern - nach Invertierung durch den Inverter (s. Block "!") - der Zeitzähler in Block 116. Dieser stellt fest, ob die Dauer, mit welcher die untere Grenzheizspannung U_H_min an der Heizeinrichtung 26 anliegt, eine im Block vorbestimmte Resetierzeit T_reset überschreitet.

Sobald die Resetierzeit T_reset erreicht wird, das heißt, die Heizeinrichtung 26 über die Dauer T_reset mit der unteren Grenzheizspannung U_H_min betrieben wurde, ist die Bedingung am Eingang R des Flip-Flop-Elements 118 erfüllt und der Schalter 120 wird erneut in die in Figur 2 gezeigte Stellung geschaltet, so dass wieder die zulässige Maximalheizspannung U_H_max an der Heizeinrichtung 26 anliegt.

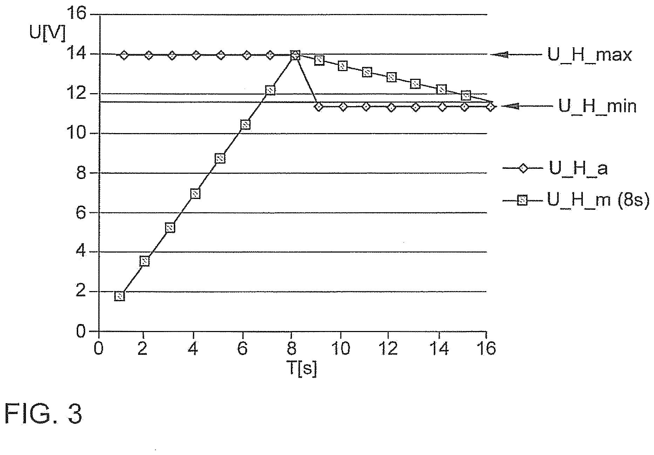

Figur 3 zeigt den zeitlichen Verlauf der aktuell an der Heizeinrichtung 26 anliegenden Heizspannung U_H_a sowie der mittleren Heizspannung U_H_m im Verlauf des erfindungsgemäßen Steuerungsverfahrens gemäß Figur 2. Dargestellt ist ein Aufheizvorgang nach Kaltstart. Hier beträgt die zulässige Maximalheizspannung U_H_max 14 Volt und die untere Grenzheizspannung U_H_min 11,5 Volt. Für die zulässige Maximalheizspannung U_H_max von 14 Volt ist eine zulässige Heizdauer von 8 Sekunden vorgegeben. Die mittlere Heizspannung U_H_m wird jeweils für eine unmittelbar zurückliegende Dauer von ebenfalls 8 Sekunden berechnet.

Mit Beginn der Beheizung wird die Heizeinrichtung 26 mit der zulässigen Maximalheizspannung von 14 Volt betrieben, die von der Fahrzeugbatterie aktuell auch tatsächlich geliefert wird (siehe Verlauf U_H_a). Die mittlere Heizspannung U_H_m überschreitet erst nach 7 Sekunden die untere Grenzheizspannung U_H_min von 11,5 Volt. Erst nach 8 Sekunden entspricht sie der zulässigen Maximalheizspannung U_H_max von 14 Volt, obwohl diese dauerhaft anliegt. Daher wird die zulässige Grenzheizzeit T_max zwar nur abhängig von der mittleren Heizspannung U_H_m bestimmt (siehe Block 112 in Figur 2), zur Ermittlung, ob die Heizspannung über der untere Grenzheizspannung U_H_min liegt, wird jedoch nicht nur die mittlere Heizspannung U_H_m, sondern auch die jeweils aktuell anliegende Heizspannung U_H_a mit abgefragt. Da ab der ersten Sekunde die aktuelle Heizspannung U_H_a größer als die untere Grenzheizspannung U_H_min ist, läuft der Zeitzähler (Block 114 in Figur 2) bereits ab diesem Zeitpunkt. Folglich ist die zulässige Grenzheizzeit T_max von 8 Sekunden nach 8 Sekunden erreicht, so dass die Heizspannung zu diesem Zeitpunkt auf die untere Grenzheizspannung von 11,5 Volt begrenzt wird.

Erst nach Ablauf von 8 Sekunden nach Umschalten der Heizeinrichtung 26 auf die untere Grenzheizspannung von 11,5 Volt fällt auch die mittlere Heizspannung U_H_m auf diesen Wert. Ab diesem Zeitpunkt wird der Zeitzähler für die Resetierzeit T_reset (Block 116 in Figur 2) aktiviert, so dass für diese Zeit sowohl die aktuelle Heizspannung U_H_a als auch die mittlere Heizspannung U_H_m bei der unteren Grenzheizspannung U_H_min verharren (in Figur 3 nicht dargestellt). Erst nach Ablauf der Resetierzeit wird der Schalter 120 wieder umgestellt und die Heizeinrichtung 26 mit der vollen Heizspannung U_H_max beaufschlagt.

Im Ergebnis wird somit die an der Heizeinrichtung 26 anliegende Heizspannung zwischen der Maximalheizspannung U_H_max und der unteren Grenzheizspannung U_H_min hin- und hergeschaltet. Das Verfahren endet, sobald die Lambdasonde 24 ihre Betriebstemperatur erreicht hat. Dieser Zeitpunkt kann über den Innenwiderstand der Sonde 24 ermittelt werden. Gegebenenfalls kann eine weitere Beheizung der Sonde 24 zur Aufrechterhaltung der Betriebstemperatur erfolgen, wofür in der Regel jedoch geringere Heizspannungen ausreichen.

Der besondere Vorteil des erfindungsgemäßen Verfahrens besteht darin, dass durch Festlegung der zulässigen Heizdauer in Abhängigkeit von der mittleren Heizspannung U_H_m während der unmittelbar zurückliegenden Zeit die tatsächliche Heizhistorie berücksichtigt wird. Weicht beispielsweise die tatsächlich anliegende Heizspannung U_H_a nach unten von der gewünschten Maximalheizspannung U_H_max ab, wirkt sich dies verlängernd auf die zulässige Grenzheizzeit T_max aus. Dadurch kann die Beheizung mit der möglichen zur Verfügung stehenden Heizspannung länger fortgesetzt werden als bei starrer Vorgabe der Grenzheizzeit T_max. Auf der anderen Seite wird ein Überschreiten der zulässigen thermischen Belastung der Lambdasonde 24 sicher vermieden.

### Bezugszeichenliste

- 10: Kraftfahrzeug
- 12: Verbrennungsmotor
- 14: Kraftstoffeinspritzanlage
- 16: Luftansauganlage
- 18: Abgasanlage
- 20: Abgaskanal
- 22: Abgaskatalysator
- 24: Bauteil / Lambdasonde
- 26: Heizeinrichtung
- 28: Motorsteuergerät
- 30: Steuervorrichtung

- U_H_a: aktuelle Heizspannung
- U_H_m: mittlere Heizspannung
- U_H_max: zulässige Maximalheizspannung
- U_H_min: untere Grenzheizspannung
- T_max: zulässige Grenzheizzeit
- T_reset: Resetierzeit

## Patentansprüche

1. Verfahren zur Steuerung einer Heizeinrichtung (26) zur Beheizung eines Bauteils (24), umfassend die sich zyklisch wiederholenden Schritte:
- Betreiben der Heizeinrichtung (26) mit einer Heizspannung,
- Ermittlung einer aktuellen Heizspannung (U_H_a) der Heizeinrichtung (26),
- Bestimmung einer mittleren Heizspannung (U_H_m) für eine vorbestimmte, unmittelbar zurückliegende Dauer,
- Bestimmung einer zulässigen Grenzheizzeit (T_max), mit welcher das Bauteil (24) mit der aktuellen Heizspannung (U_H_a) oder mit der mittleren Heizspannung (U_H_m) längstens beheizt werden darf, in Abhängigkeit von der mittleren Heizspannung (U_H_m),
- Vergleich der aktuellen Heizspannung (U_H_a) sowie der mittleren Heizspannung (U_H_m) mit einer vorbestimmten unteren Grenzheizspannung (U_H_min) und
- wenn die aktuelle Heizspannung (U_H_a) und/oder die mittlere Heizspannung (U_H_m) die vorbestimmte untere Grenzheizspannung (U_H_min) für die Dauer der zulässigen Grenzheizzeit (T_max) überschreitet, Reduzieren der Heizspannung der Heizeinrichtung (26).

2. Verfahren nach Anspruch 1, **dadurch gekennzeichnet, dass** zu Beginn des Verfahrens die Heizeinrichtung (26) mit einer bauteilspezifischen zulässigen Maximalheizspannung (U_H_max) betrieben wird.

3. Verfahren nach einem der vorhergehenden Ansprüche, **dadurch gekennzeichnet, dass** die untere Grenzheizspannung (U_H_min) so vorbestimmt wird, dass ihr dauerhaftes Anliegen zu keiner thermischen Beeinträchtigung des beheizten Bauteils (24) führt.

4. Verfahren nach Anspruch 3, **dadurch gekennzeichnet, dass** die untere Grenzheizspannung (U_H_min) so hoch wie möglich vorbestimmt wird, dass ihr dauerhaftes Anliegen so eben zu keiner thermischen Beeinträchtigung des beheizten Bauteils (24) führt.

5. Verfahren nach Anspruch 3 oder 4, **dadurch gekennzeichnet, dass** wenn die aktuelle Heizspannung (U_H_a) und/oder die mittlere Heizspannung (U_H_m) die vorbestimmte untere Grenzheizspannung (U_H_min) über die Dauer der zulässigen Grenzheizzeit (T_max) überschreitet, die Heizspannung der Heizeinrichtung (26) auf die untere Grenzheizspannung (U_H_min) oder eine niedrigere Heizspannung reduziert wird.

6. Verfahren nach einem der vorhergehenden Ansprüche, **dadurch gekennzeichnet, dass** als aktuelle Heizspannung (U_H_a) der Heizeinrichtung (26) eine aktuelle Ausgangsspannung einer die Heizeinrichtung (26) betreibenden Energiequelle, insbesondere einer Batterie, angesetzt wird.

7. Verfahren nach einem der vorhergehenden Ansprüche, **dadurch gekennzeichnet, dass** nach Ablauf einer vorbestimmten Resetierzeit (T_reset) nach Reduzieren der Heizspannung die Heizeinrichtung (26) wieder mit der zulässigen Maximalheizspannung (U_H_max) betrieben wird.

8. Verfahren nach Anspruch 7, **dadurch gekennzeichnet, dass** die Resetierzeit (T_reset) so vorbestimmt wird, dass nach Betreiben der Heizeinrichtung (26) mit der reduzierten Heizspannung für die Dauer der Resetierzeit (T_reset) ein Abkühlen des Bauteils (24) auf eine unkritische Temperatur zu erwarten ist.

9. Verfahren nach einem der vorhergehenden Ansprüche, **dadurch gekennzeichnet, dass** das Bauteil (24) ein Sensor, insbesondere ein Abgassensor für einen Verbrennungsmotor, vorzugsweise eine Lambdasonde ist.

10. Steuervorrichtung (30) zur Steuerung einer Heizeinrichtung (26) zur Beheizung eines Bauteils (24), die zur Ausführung des Verfahrens nach einem der Ansprüche 1 bis 8 eingerichtet ist.

11. Steuervorrichtung (30) nach Anspruch 10, umfassend einen gespeicherten Algorithmus in computerlesbarer Form zur Ausführung des Verfahrens nach einem der Ansprüche 1 bis 9.

12. Kraftfahrzeug (10) mit einem Verbrennungsmotor (12) und einer diesem angeschlossenen Abgasanlage (18) mit einem Abgassensor (24), der eine Heizeinrichtung (26) zur seiner Beheizung aufweist, sowie eine Steuervorrichtung (30) nach einem der Ansprüche 10 oder 11.

## Claims

1. Method for controlling a heating device (26) for heating a component (24), comprising cyclically repeating the steps:
- operating the heating device (26) at a heating voltage,
- ascertaining a prevailing heating voltage (U_H_a) of the heating device (26),
- ascertaining a mean heating voltage (U_H_m) for a predetermined, immediately preceding period of time,
- ascertaining a maximum permissible duration of the heating period (T_max) for which the component (24) may be heated for the maximum period of time using the prevailing heating voltage (U_H_a) or using the mean heating voltage (U H m), in dependence upon the mean heating voltage (U_H_m),
- comparing the prevailing heating voltage (U_H_a) and the mean heating voltage (U_H_m) with a predetermined minimum heating voltage (U_H_min), and
- reducing the heating voltage of the heating device (26) if the prevailing heating voltage (U_H_a) and/or the mean heating voltage (U_H_m) exceeds the predetermined minimum heating voltage (U_H_min) for the duration of the maximum permissible heating period (T_max).

2. Method according to Claim 1, **characterized in that** at the commencement of the method the heating device (26) is operated at a component specific maximum permissible heating voltage (U_H_max).

3. Method according to any one of the preceding claims, **characterized in that** the minimum heating voltage (U_H_min) is predetermined in such a manner that when said voltage is applied permanently the heated component (24) is not damaged as a result of thermal loading.

4. Method according to Claim 3, **characterized in that** the minimum heating voltage (U_H_min) is predetermined to be as high as possible so that when said voltage is applied permanently, the heated component (24) is not damaged as a result of thermal loading.

5. Method according to Claim 3 or 4, **characterized in that** if the prevailing heating voltage (U_H_a) and/or the mean heating voltage (U_H_m) exceeds the predetermined minimum heating voltage (U_H_min) for the duration of the maximum permissible heating period (T_max), the heating voltage of the heating device (26) is reduced to the minimum heating voltage (U_H_min) or to a lower heating voltage.

6. Method according to any one of the preceding claims **characterized in that** a prevailing output voltage of an energy source that is operating the heating device (26) is used as the prevailing heating voltage (U_H_a) of the heating device (26), said energy source being in particular a battery.

7. Method according to any one of the preceding claims **characterized in that** after a predetermined reset period of time (T_reset) has elapsed following a reduction of the heating voltage, the heating device (26) is once more operated at the maximum permissible heating voltage (U_H_max).

8. Method according to Claim 7, **characterized in that** the reset period of time (T_reset) is predetermined in such a manner that after operating the heating device (26) at the reduced heating voltage for the duration of the reset period of time (T_reset), it is to be expected that the component (24) cools down to a noncritical temperature.

9. Method according to any one of the preceding claims **characterized in that** the component (24) is a sensor, in particular an exhaust gas sensor for an internal combustion engine, preferably a lambda sensor.

10. Control device (30) for controlling a heating device (26) for heating a component (24), which control device is designed for implementing the method according to any one of Claims 1 to 8.

11. Control device (30) according to Claim 10, comprising a stored algorithm in computer-readable form for implementing the method according to any one of Claims 1 to 9.

12. Motor vehicle (10) comprising an internal combustion engine (12) and an exhaust gas system (18) connected to the internal conclusion engine, the exhaust gas system comprising an exhaust gas sensor (24) that comprises a heating device (26) for the purpose of heating said exhaust gas sensor, and a control device (30) according to any one of Claims 10 or 11.

## Revendications

1. Procédé de commande d'un dispositif de chauffage (26) destiné à chauffer un composant (24), comprenant les étapes suivantes qui se répètent de manière cyclique :
- fonctionnement du dispositif de chauffage (26) avec une tension de chauffage,
- détermination d'une tension de chauffage actuelle (U_H_a) du dispositif de chauffage (26),
- détermination d'une tension de chauffage moyenne (U_H_m) pendant une durée prédéfinie qui vient immédiatement de s'écouler,
- détermination d'un temps de chauffage limite (T_max) admissible pendant lequel le chauffage du composant (24) est permis le plus longtemps avec la tension de chauffage actuelle (U_H_a) ou avec la tension de chauffage moyenne (U_H_m), en fonction de la tension de chauffage moyenne (U_H_m),
- comparaison de la tension de chauffage actuelle (U_H_a) ainsi que de la tension de chauffage moyenne (U_H_m) avec une tension de chauffage limite basse (U_H_min) prédéfinie et
- lorsque la tension de chauffage actuelle (U_H_a) et/ou la tension de chauffage moyenne (U_H_m) dépasse la tension de chauffage limite basse (U_H_min) prédéfinie pendant la durée du temps de chauffage limite (T max) admissible, réduction de la tension de chauffage du dispositif de chauffage (26).

2. Procédé selon la revendication 1, **caractérisé en ce qu'**au début du procédé, le dispositif de chauffage (26) fonctionne avec une tension de chauffage maximale (U_H_max) admissible spécifique au composant.

3. Procédé selon l'une des revendications précédentes, **caractérisé en ce que** la tension de chauffage limite basse (U_H_min) est prédéfinie de telle sorte que son application persistante ne donne lieu à aucun préjudice thermique du composant (24) chauffé.

4. Procédé selon la revendication 3, **caractérisé en ce que** la tension de chauffage limite basse (U_H_min) est prédéfinie la plus élevée possible de telle sorte que son application persistante ne donne ainsi lieu à aucun préjudice thermique du composant (24) chauffé.

5. Procédé selon la revendication 3 ou 4, **caractérisé en ce que** lorsque la tension de chauffage actuelle (U_H_a) et/ou la tension de chauffage moyenne (U_H_m) dépasse la tension de chauffage limite basse (U_H_min) pendant la durée du temps de chauffage limite (T_max) admissible, la tension de chauffage du dispositif de chauffage (26) est réduite à la tension de chauffage limite basse (U_H_min) ou à une tension de chauffage plus faible.

6. Procédé selon l'une des revendications précédentes, **caractérisé en ce que** la tension de chauffage actuelle (U_H_a) du dispositif de chauffage (26) appliquée est une tension de sortie actuelle d'une source d'énergie qui fait fonctionner le dispositif de chauffage (26), notamment d'une batterie.

7. Procédé selon l'une des revendications précédentes, **caractérisé en ce qu'**après l'écoulement d'un temps de réinitialisation (T_reset) prédéfini après la réduction de la tension de chauffage, le dispositif de chauffage (26) fonctionne de nouveau avec la tension de chauffage maximale (U_H_max) admissible.

8. Procédé selon la revendication 7, **caractérisé en ce que** le temps de réinitialisation (T_reset) est prédéfini de telle sorte qu'après le fonctionnement du dispositif de chauffage (26) avec la tension de chauffage réduite pendant la durée du temps de réinitialisation (T_reset), un refroidissement du composant (24) à une température non critique peut être attendu.

9. Procédé selon l'une des revendications précédentes, **caractérisé en ce que** le composant (24) est un capteur, notamment un capteur de gaz d'échappement pour un moteur à combustion interne, de préférence une sonde lambda.

10. Dispositif de commande (30) servant à commander un dispositif de chauffage (26) destiné à chauffer un composant (24), lequel est conçu pour mettre en oeuvre le procédé selon l'une des revendications 1 à 8.

11. Dispositif de commande (30) selon la revendication 10, comprenant un algorithme mis en mémoire sous une forme lisible par ordinateur pour mettre en oeuvre le procédé selon l'une des revendications 1 à 9.

12. Véhicule automobile (10) comprenant un moteur à combustion interne (12) et un système d'échappement (18) raccordé à celui-ci, équipé d'un capteur de gaz d'échappement (24) qui possède un dispositif de chauffage (26) pour son chauffage, ainsi qu'un dispositif de commande (30) selon l'une des revendications 10 ou 11.
